# EUROPEAN PATENT SPECIFICATION

(11) **EP 0 649 135 B1**
(45) Date of publication and mention of the grant of the patent: **15.12.1999**
(21) Application number: 94116021.0
(22) Date of filing: 11.10.1994
(51) Int. Cl.: G11B 11/12, G11B 9/00

(54) **Optical memory medium and write and read apparatuses using the same**
Optisches Speichermedium und Aufzeichnungs- und Wiedergabegerät unter Verwendung dieses Mediums
Milieu de mémoire optique et appareils d'enregistrement et de reproduction utlisant ledit milieu

(30) Priority: 19.10.1993 JP 26128693
(43) Date of publication of application: 19.04.1995
(73) Proprietor: SEIKO INSTRUMENTS INC., Tokyo 136 (JP)
(72) Inventor: Fujihira, Masamichi, Yokohama-shi, Kanagawa (JP); Muramatsu, Hiroshi, c/o Seiko Instruments Inc., Chiba-shi, Chiba (JP); Chiba, Norio, c/o Seiko Instruments Inc., Chiba-shi, Chiba (JP); Ataka, Tatsuaki, c/o Seiko Instruments Inc., Chiba-shi, Chiba (JP)
(74) Representative: Fleuchaus, Leo, Dipl.-Ing.

(56) References cited:
- EP-A- 0 305 033
- EP-A- 0 487 233
- EP-A- 0 593 875
- PATENT ABSTRACTS OF JAPAN vol. 16, no. 426 (P-1419) 11 September 1992 & JP-A-04 151 142 (MATSUSHITA)
- PATENT ABSTRACTS OF JAPAN vol. 11, no. 287 (P-617) 17 September 1987 & JP-A-62 084 451 (SEIKO) 17 April 1987
- APPLIED PHYSICS LETTERS, vol.61, no.2, 13 July 1992, NEW YORK US pages 142 - 144 E. BETZIG ET AL. 'Near-field magneto-optics and high density data storage'
- NATURE, vol.359, 10 September 1992, LONDON GB pages 133 - 135 R. M. OVERNEY ET AL. 'Friction measurements on phase-separated thin films with a modified atomic force microscope'

## Description

### BACKGROUND OF THE INVENTION

The present invention relates to an optical memory medium wherein high density recording is performed on the surface of a substrate through optically produced chemical changes on the surface of the substrate, an optical recording apparatus having a microscopic aperture for performing optical recording with high density and an apparatus for reading information from changes in the frictional force on the surface of the memory medium.

Conventional high density memory media include magnetic disks, optical disks, magneto-optical disks and the like. A magnetic disk is a flat plate applied with a magnetic substance and is written and read by a magnetic head. Since a magnetic disk is magnetized in a horizontal direction, there is a need for preventing magnetic fields from overlapping each other, which has imposed a certain limit on efforts to obtain higher density. Optical disks and magneto-optical disks were developed in an attempt to allow recording with higher density. In the case of an optical disk, a raw disk is made by means of exposure to laser beams; a master disk is made by means of electroforming from the raw disk; and a replica disk is made by means of injection molding from the master disk. Reading is performed using variations in the reflectance of laser beams which depends on each bit. A magneto-optical disk is obtained by forming a thin film of a vertically magnetized material on a flat plate formed with pits for tracks. To perform writing on the magneto-optical disk, vertical magnetized spots are written into it by applying magnetic fields thereto in a vertical direction, with heating of spots irradiated by laser beams maintained above the Curie-point. Reading is performed by directing laser beams and utilizing changes in the polarization angle of the reflected laser beams which depend on the direction of the magnetization of the spots.

Laser beams are used to read bits in both of optical disks and magneto-optical disks which are high density optical memory media. The bit size is limited by the diameter of a spot to which a laser beam is converged and the minimum size is on the order of the wavelength of light, i.e., 1 µm.

Nature, vol. 359, pp. 133 - 135, R. M. Overney et al., "Friction measurements on phase- separated thin films with a modified atomic force microscope" discloses friction measurements on phase separated thin films by help of a modified friction force microscope where both the normal and lateral forces are measured simultaneously but separately and wherein a friction force microscope is used to distinguish the chemical composition of samples composed of different chemical species.

### SUMMARY OF THE INVENTION

It is an object of the present invention to provide a memory medium wherein the size of a memory bit is smaller than the wavelength of light and an apparatus for writing to and reading from the memory medium.

In order to achieve the above-described object, according to the present invention, there is provided an optical memory medium according to claim 1. As an apparatus for optical writing on this optical medium there is provided an apparatus according to claim 4. Further, as a read apparatus, there is provided an apparatus according to claim 8.

The optically reactive functional group can be provided with high density on the surface of the optical memory medium comprising a flat plate modified by a photolytic functional group. Therefore, the medium will have a unit memory area on the order of a molecule, i.e. a memory density equal to or less than 1 nm.

Among optically reactive functional groups, photolytic functional groups can be desorbed by irradiating the optical beam with a predetermined wavelength and therefore allows optical writing. Unlike conventional irradiation using optical beams, with the optical probe having a microscopic aperture, the area of irradiation can be focused to approximately 20 nm diameter, which allows high density recording.

The friction coefficient of the surface of the substrate varies depending whether there is an optically reactive functional group on the surface or not. It is therefore possible to read the information stored thereon by monitoring the variations in the friction. The frictional force can be detected by detecting the angle at which a cantilever for an atomic force microscope is twisted by the friction at the surface.

When changes in the resonance characteristics of the piezoelectric plate are used as a means for detecting the frictional force, an optical memory medium obtained by modifying a piezoelectric plate in a shear vibration mode with a photolytic functional group is used. If the probe is brought into contact with the shear-vibrating piezoelectric plate, there will be a change in the resonance characteristics of the piezoelectric element. Since this change in characteristics depends on the friction coefficient of the surface, the information recorded thereon can be read by monitoring changes in the resonance characteristics of the piezoelectric element.

### BRIEF DESCRIPTION OF THE DRAWINGS

Fig. 1A is a typical view of an optical memory medium according to the present invention;
Fig. 1B illustrates a chemical formula for an example of a chemical modification substance according to the present invention;
Fig. 2 is a typical view of an optical recording apparatus according to the present invention;
Fig. 3 is a typical view of an optical write apparatus according to the present invention;
Fig. 4 is a typical view of an optical memory piezoelectric medium according to the present invention; and
Fig. 5 is a typical view of an apparatus for writing to and reading from an optical memory piezoelectric medium according to the present invention.

### DETAILED DESCRIPTION OF THE PREFERRED EMBODIMENTS

An embodiment of the present invention will now be described with reference to the drawings.

### (The Configuration of the Optical Memory Medium)

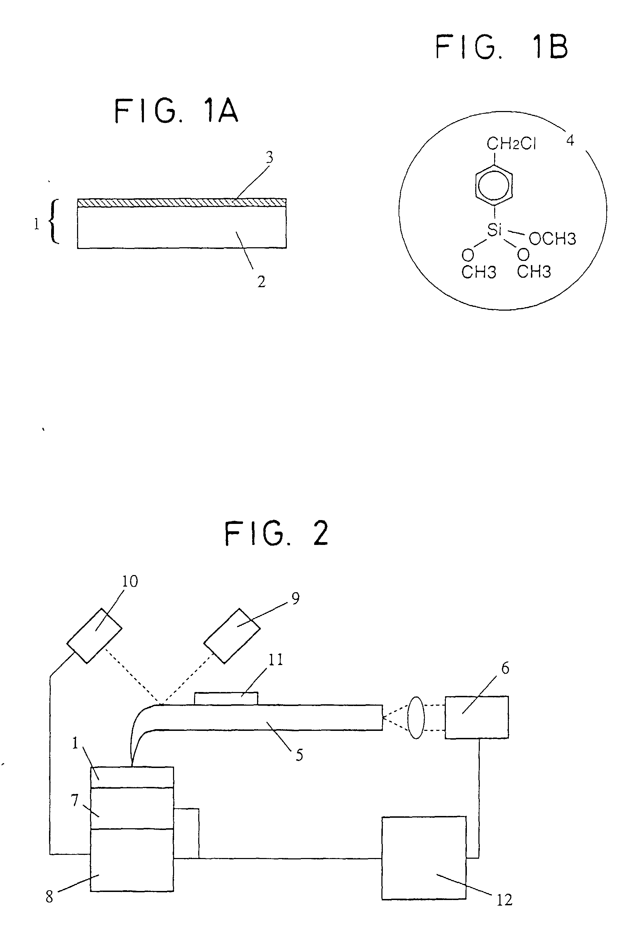

Fig. 1 is a typical view of an optical memory medium 1 according to the present invention. In Fig. 1A, the optical memory medium 1 comprises a silicon substrate 2 and a film 3 chemically modified on the surface thereof. As the chemically modification substance, 4-(chloromethyl) phenyl trimethoxy silane (CMPTS) 4 as shown in Fig. 1B is used. The chemically modified film 3 is made by dipping a 10 mm square silicon substrate 2 which had been cleaned in advance into a 1% toluene solution of CMPTS at the room temperature for 30 minutes.

### (The Configuration of the Optical Recording Apparatus)

Fig. 2 is a typical view of an optical recording apparatus according to the present invention. In Fig. 2, as an optical probe 5 having a microscopic aperture, an optical fiber sharpened at the leading edge thereof by means of laser beam heating and bent in the form of "L" is used. The optical probe 5 is processed to be reflective by applying a metal film to the surface of the optical probe 5 excluding the leading end of a core portion. The leading end of the optical probe 5 is disposed proximate to the surface of the optical memory medium 1, and the other end face of the probe is connected to a mercury lamp 6 so that light is introduced to the optical probe 5 through a lens system. The X-Y-Z control mechanism is for controlling the position of the optical probe 5 in the surface of the optical memory medium 1 and for controlling the distance between the leading end of the optical probe 5 and the optical memory medium 1. The X-Y-Z control means comprises an X-Y-Z fine adjustment mechanism 7 constituted by a piezoelectric element, a coarse adjustment mechanism 8 constituted by a stepping motor, a laser 9 and a two-piece photodiode 10 serving as an optical lever used for controlling the distance between the optical probe 5 and the optical memory medium 1.

A reflector for the optical lever is provided on the back surface opposite to the leading end of the optical probe 5 for allowing distance control through the detection of the deflection of the optical probe 5. A bimorph 11 may be connected to a portion where the optical fiber 5 is fixed to perform distance control utilizing changes in the amplitude of vibration caused in the vicinity of the resonance frequency by applying an AC voltage to the bimorph 11. Optical writing is performed with the light from the mercury lamp 6 turned on and off using a mechanical chopper to allow the writing of bit patterns of 20 nm in size. All of these operations are controlled by a computer 12 for controlling the apparatus as a whole.

### (The Configuration of the Optical Read Apparatus)

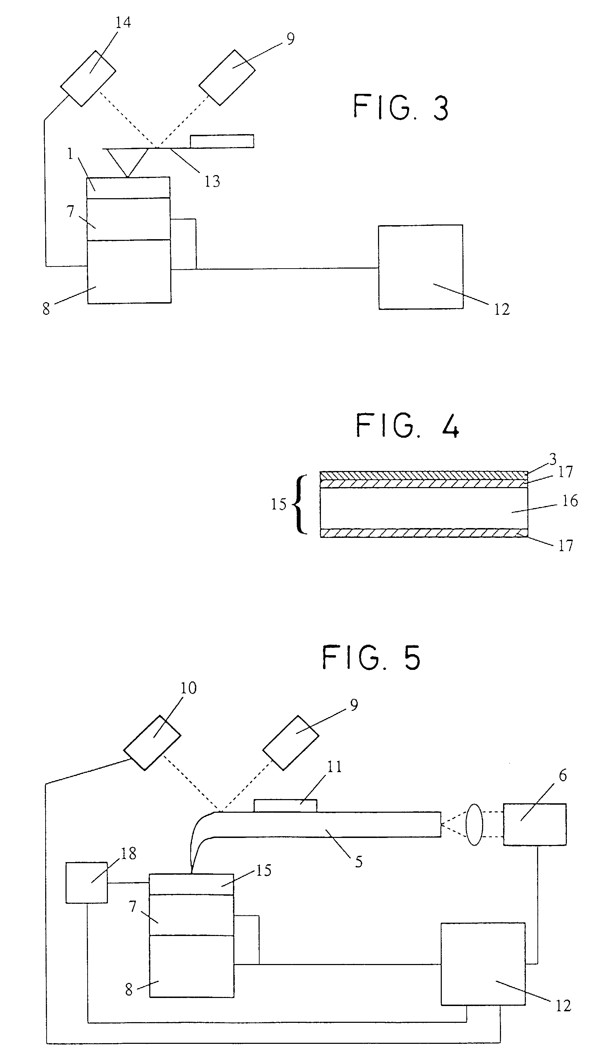

Fig. 3 is a typical view of an optical read apparatus according to the present invention. In Fig. 3, a cantilever made of silicon nitride having a microscopic projection at the leading end thereof is used as a friction detecting probe 13, the projection at the leading end of the friction detection probe 13 being positioned proximate to the surface of the optical memory medium 1. Like the recording apparatus, an X-Y-Z control mechanism is provided for controlling the position of the friction detecting probe 13 in the surface of the optical memory medium 1 and for controlling the distance between the leading end of the friction detecting probe 13 and the optical medium 1. The X-Y-Z control means comprises an X-Y-Z fine adjustment mechanism 7 constituted by a piezoelectric element, a coarse adjustment mechanism 8 constituted by a stepping motor, a laser 9 and a four-piece photodiode 14 serving as an optical lever used for controlling the distance between the friction detecting probe 13 and the optical memory medium 1.

A reflector for the optical lever is provided on the back surface opposite to the leading end of the friction detecting probe 13, which performs distance control and the detection of torsion simultaneously by detecting the deflection of the friction detecting probe 13 and by detecting the torsion of the friction detecting probe 13 caused when the friction detecting probe 13 is scanned. These operations are all controlled by the computer 12 for controlling the apparatus as a whole. With this read apparatus, it is possible to clearly read the bits written through optical writing by means of the friction detecting probe 13. Although the bits could be read by controlling the distance of the friction detection probe 13 in the Z-direction, the method of friction detection for reading the memory bits can perform much higher sensitivity.

### (The Configuration of the Optical Recording Piezoelectric Medium)

Fig. 4 is a typical view of an optical recording piezoelectric medium 15 according to the present invention. The optical recording piezoelectric medium in Fig. 4 is an AT cut quartz plate 16 which is a piezoelectric element causing shear vibration. Electrodes 17 are formed by sputtering both sides of the AT cut quartz plate 16 using titanium as a backing layer and platinum. A film 3 which is chemically modified on the surface of the AT cut quartz plate 16 similar to that shown in Fig. 1A is provided on the surface of one of the electrodes 17.

### (The Configuration of the Apparatus for Writing to and Reading from the Optical Memory Medium)

Fig. 5 is a typical view of an apparatus for writing to and reading from an optical memory medium according to the present invention. The apparatus shown in Fig. 5 is obtained by replacing the optical memory medium 1 of the optical recording apparatus in Fig. 2 with an optical memory piezoelectric medium 15 and by adding a circuit 18 for measuring the characteristics of the piezoelectric medium 15. The circuit 18 for measuring the characteristics of the piezoelectric medium 15 measures changes in the admittance of the piezoelectric medium 15 by measuring the difference between the voltage at an oscillation circuit and the voltage across the piezoelectric medium 15 and exhibits a response speed on the order of 10 µm for the piezoelectric medium 15 having a resonance frequency on the order of 10 MHz. Further, with this circuit 18, the piezoelectric medium 15 can be caused to vibrate with a reference piezoelectric element, and changes in the characteristics the piezoelectric medium 15 can be monitored by detecting changes in the resonance frequency of the piezoelectric medium 15 using a balanced mixer. This apparatus allows memory bits to be optically written and read.

The present invention can be implemented utilizing various photochemical reactions such as photooxidation, photoreduction, cis-trans photoisomerization, photochromic reactions in addition to the photolysis of CMPTS described in the above embodiment. The surface modification can be performed using various methods other than the silane-coupling process as described in the embodiment such as methods for making films including self-organizing films made of thiol compounds, Langmuir-Blodgett films made of amphipathic compounds and the like. In addition, the vapor deposition method, spin coat method and the like may be also used.

Memory erasing can be performed by applying light having a different wavelength as in cis-trans photoisomerization and reversible photochromic reactions or by thermally returning the medium to the initial state.

As a method for writing whole information on the optical memory medium at one time, recording can be performed by bringing a metal mask made by means of photolithography on a surface of a quartz substrate into tight contact with the optical memory medium and by directing light to the rear surface of the quartz substrate. This method is effective for writing tracks for determining bit addresses and for making a large number of copies of the information recorded thereon.

As a method for moving the optical memory medium in the horizontal direction, a mechanism for rotating the optical memory medium may be provided in the coarse adjustment mechanism to perform optical recording in the form of rings or spiral in addition to a method of moving the medium in the X- and Y-directions to perform recording in the form of squares.

The optical memory medium and the recording and read apparatuses using this optical memory medium made it possible to record and reproduce information with high density.

## Claims

1. An optical memory medium (1, 15) comprising a substrate (2), and an optically reactive functional group modified on a surface (3) of said substrate,
characterized in
that said substrate (2) is a piezoelectric substrate.

2. An optical memory medium according to claim 1, wherein said piezoelectric substrate (2) is an AT cut quartz plate (16).

3. An optical memory medium (1) according to claim 1, wherein said optically reactive functional group is selected from a species of photolytic reaction, photooxidation, photoreduction, cis-trans photoisomerization, and photochromic reaction.

4. An optical write apparatus comprising:
an optical memory medium comprising a piezoelectric substrate modified on the surface thereof by an optically reactive functional group for recording information;
a light source (6) for generating a light beam;
an optical probe (5) having a microscopic aperture at the leading end thereof for focusing said light beam on said optical memory medium, said light beam is introduced from a back end which is opposite end to the leading end; and
an X-Y-Z position control means for controlling a relative position between the leading end of said optical probe and the surface of said optical memory medium.

5. An optical write apparatus according to claim 4, further comprising a means for measuring the resonance characteristics of a piezoelectric substrate.

6. An optical write apparatus according to claim 4, wherein said optically reactive functional group is selected from a species of photolytic reaction, photooxidation, photoreduction, cis-trans photoisomerization, and photochromic reaction.

7. An optical write apparatus according to claim 4, wherein said X-Y-Z position control means comprises a deflection monitoring means for monitoring a vertical deflection of said optical probe having a laser and two-piece photo detector.

8. An optical read apparatus characterized in comprising
an optical memory medium (1, 15) which comprises a piezoelectric substrate modified on the surface thereof by an optically reactive functional group on which predetermined information are recorded;
a friction detection probe (13) having a microscopic projection at the leading end thereof for detecting a frictional force between the surface of said optical memory medium and the leading end thereof; and
an X-Y-Z position control means for controlling a relative position between the leading end of said friction detecting probe and the surface of said optical memory medium.

9. An optical read apparatus according to claim 8, further comprising a means for measuring the resonance characteristics of a piezoelectric substrate.

10. An optical read apparatus according to claim 8, wherein said optically reactive functional group is selected from a species of photolytic reaction, photooxidation, photoreduction, cis-trans photoisomerization, and photochromic reaction.

11. An optical read apparatus according to claim 8, wherein said X-Y-Z position control means comprises a deflection and torsion monitoring means for monitoring a vertical deflection and axial torsion of said friction detecting probe having a laser and four-piece photo detector.

## Patentansprüche

1. Ein optisches Speichermedium (1, 15) enthaltend ein Substrat (2) und eine optisch reaktive funktionale Gruppe, modifiziert an einer Oberfläche (3) des Substrats, dadurch gekennzeichnet,
daß es sich bei dem Substrat (2) um ein piezoelektrisches Substrat handelt.

2. Ein optisches Speichermedium gemäß Anspruch 1, in dem das piezoelektrische Substrat (2) eine AT-geschnittene Quarzplatte (16) ist.

3. Ein optisches Speichermedium gemäß Anspruch 1, in dem die optisch reaktive funktionale Gruppe ausgewählt ist aus einer Gattung mit photolytischer Reaktion, Photooxidation, Photoreduktion, cis-trans-Photoisomerisation und photochromer Reaktion.

4. Ein optisches Schreibgerät, enthaltend:
ein optisches Speichermedium mit einem piezoelektrischen Substrat, modifiziert an dessen Oberfläche durch eine optisch reaktive funktionale Gruppe, zum Aufzeichnen von Informationen;
eine Lichtquelle (6) zum Erzeugen eines Lichtstrahls;
eine optische Sonde (5) mit einer mikroskopischen Öffnung an deren vorderem Ende zum Fokussieren des Lichtstrahls auf das optische Speichermedium, wobei der Lichtstrahl an einem hinteren Ende eingespeist wird, das das entgegengesetzte Ende des vorderen Endes ist; und
ein X-Y-Z-Positionssteuermittel zum Steuern der relativen Position zwischen dem vorderen Ende der optischen Sonde und der Oberfläche des optischen Speichermediums.

5. Ein optisches Schreibgerät gemäß Anspruch 4, das ferner ein Mittel zum Messen der Resonanzcharakteristiken eines piezoelektrischen Substrats aufweist.

6. Ein optisches Schreibgerät gemäß Anspruch 4, in dem die optisch reaktive funktionale Gruppe ausgewählt ist aus einer Gattung mit photolytischer Reaktion, Photooxidation, Photoreduktion, cis-trans-Photoisomerisation und photochromer Reaktion.

7. Ein optisches Schreibgerät gemäß Anspruch 4, in dem das X-Y-Z-Positionssteuermittel ein Ablenkungsüberwachungsmittel umfaßt zum Überwachen einer vertikalen Ablenkung der optischen Sonde mit einem Laser und einem zweiteiligen Photodetektor.

8. Ein optisches Lesegerät, dadurch gekennzeichnet, daß es aufweist
ein optisches Speichermedium (1,15), das ein piezoelektrisches Substrat enthält, modifiziert durch eine optisch reaktive funktionale Gruppe, auf dessen Oberfläche vorbestimmte Informationen aufgezeichnet sind;
eine Reibungserfassungssonde (13) mit einem mikroskopischen Vorsprung an ihrem vorderen Ende zum Erfassen einer Reibungskraft zwischen der Oberfläche des optischen Speichermediums und dessen vorderem Ende; und
ein X-Y-Z-Positionssteuermittel zum Steuern einer relativen Position zwischen dem vorderen Ende der Reibungserfassungssonde und der Oberfläche des optischen Speichermediums.

9. Ein optisches Lesegerät gemäß Anspruch 8, das ferner ein Mittel enthält zum Messen der Resonanzcharakteristiken eines piezoelektrischen Substrats.

10. Ein optisches Lesegerät gemäß Anspruch 8, in dem die optisch reaktive funktionale Gruppe ausgewählt ist aus einer Gattung mit photolytischer Reaktion, Photooxidation, Photoreduktion, cis-trans-Photoisomerisation und photochromer Reaktion.

11. Ein optisches Lesegerät gemäß Anspruch 8, in dem das X-Y-Z-Positionssteuermittel ein Abweichungs- und Torsionsüberwachungsmittel aufweist zum Überwachen einer vertikalen Abweichung und einer axialen Torsion der Reibungserfassungssonde mit einem Laser und einem vierteiligen Photodetektor.

## Revendications

1. Support de mémoire optique (1, 15) comprenant un substrat (2), et un groupe fonctionnel optiquement réactif modifié sur une surface (3) dudit substrat; caractérisé en ce que
ledit substrat (2) est un substrat piézo-électrique.

2. Support de mémoire optique selon la revendication 1, dans lequel ledit substrat piézo-électrique (2) est une plaque de quartz en coupe AT (16).

3. Support de mémoire optique (1) selon la revendication 1, dans lequel ledit groupe fonctionnel optiquement réactif est sélectionné à partir d'une espèce obtenue par une réaction photolytique, de photo-oxydation, de photo-réduction, de photo-isomérisation cis-trans et photochromique.

4. Dispositif d'écriture optique comprenant :
un support de mémoire optique comprenant un substrat piézo-électrique modifié sur la surface de celui-ci par un groupe fonctionnel optiquement réactif afin d'enregistrer des informations,
une source de lumière (6) destinée à générer un faisceau de lumière,
une sonde optique (5) comportant une ouverture microscopique à l'extrémité avant de celle-ci afin de focaliser ledit faisceau de lumière sur ledit support de mémoire optique, ledit faisceau de lumière étant introduit par l'extrémité arrière qui est l'extrémité opposée à l'extrémité avant, et
un moyen de commande de position en X-Y-Z destiné à commander une position relative entre l'extrémité avant de ladite sonde optique et la surface dudit support de mémoire optique.

5. Dispositif d'écriture optique selon la revendication 4, comprenant en outre un moyen destiné à mesurer les caractéristiques de résonance d'un substrat piézo-électrique.

6. Dispositif d'écriture optique selon la revendication 4, dans lequel ledit groupe fonctionnel optiquement réactif est sélectionné à partir d'une espèce obtenue par une réaction photolytique, de photo-oxydation, de photo-réduction, de photo-isomérisation cis-trans, et photochromique.

7. Dispositif d'écriture optique selon la revendication 4, dans lequel ledit moyen de commande de position en X-Y-Z comprend un moyen de surveillance de déviation destiné à surveiller une déviation verticale de ladite sonde optique, comportant un laser et un photodétecteur à deux éléments.

8. Dispositif de lecture optique caractérisé en ce qu'il comprend
un support de mémoire optique (1, 15) qui comprend un substrat piézo-électrique modifié sur la surface de celui-ci par un groupe fonctionnel optiquement réactif sur lequel des informations prédéterminées sont enregistrées,
une sonde de détection de frottement (13) comportant une saillie microscopique à l'extrémité avant de celle-ci afin de détecter une force de frottement entre la surface dudit support de mémoire optique et l'extrémité avant de celle-ci, et
un moyen de commande de position en X-Y-Z destiné à commander une position relative entre l'extrémité avant de ladite sonde de détection de frottement et la surface dudit support de mémoire optique.

9. Dispositif de lecture optique selon la revendication 8, comprenant en outre un moyen destiné à mesurer les caractéristiques de résonance d'un substrat piézo-électrique.

10. Dispositif de lecture optique selon la revendication 8, dans lequel ledit groupe fonctionnel optiquement réactif est sélectionné à partir d'une espèce obtenue par une réaction photolytique, de photo-oxydation, de photo-réduction, de photo-isomérisation cis-trans, et photochromique.

11. Dispositif de lecture optique selon la revendication 8, dans lequel ledit moyen de commande de position en X-Y-Z comprend un moyen de surveillance de déviation et de torsion destiné à surveiller une déviation verticale et une torsion axiale de ladite sonde de détection de frottement comportant un laser et un photodétecteur à quatre éléments.
